# EUROPÄISCHE PATENTSCHRIFT

(11) **EP 2 624 263 B1**
(45) Veröffentlichungstag und Bekanntmachung des Hinweises auf die Patenterteilung: **17.10.2018**
(21) Anmeldenummer: 12008466.0
(22) Anmeldetag: 20.12.2012
(51) Int. Cl.: H01F 7/18, F02D 41/20, F02D 41/22, H01H 47/32

(54) **Elektrische Ansteuerung für Elektromagnete**
Electrical control for electromagnets
Commande électrique pour électroaimants

(30) Priorität: 23.12.2011 DE 102011122363
(43) Veröffentlichungstag der Anmeldung: 07.08.2013
(73) Patentinhaber: Thomas Magnete GmbH, 57562 Herdorf (DE)
(72) Erfinder: Kerber, Josef, 63773 Goldbach (DE); Schneider, Jörg, 51580 Reichshof (DE); Becker, Jannik, 57290 Neunkirchen (DE)

(56) Entgegenhaltungen:
- WO-A1-2012/061056
- DE-A1- 3 841 802
- JP-A- 2010 080 869

## Beschreibung

Die Erfindung betrifft eine elektrische Ansteuerung für einen Elektromagneten. Elektrische Ansteuerungen für Elektromagnete sind bekannt und weit verbreitet. Sie werden vor allem verwendet, um in Abhängigkeit von einem Eingangssignal einen geregelten elektrischen Strom an einen Elektromagneten abzugeben. Die Kraft eines Elektromagneten ist proportional zu dem Strom durch seine Spule. Beaufschlagt man die Spule mit einem geregelten Strom, so kann man ohne weitere Maßnahmen die Kraft des Elektromagneten einstellen. Dies ist insbesondere bei der Ansteuerung von Ventilen vorteilhaft, aber man nutzt diesen Zusammenhang auch bei Proportionalmagneten für andere Anwendungen, zum Beispiel in Getrieben.
Die oben genannte Stromregelung, die Verarbeitung der Eingangsignale und einige für die Anwendung spezifische Aufgaben, wie die Erzeugung von zeitabhängigen Stromverläufen, fasst man vorteilhaft zu einer elektrischen Ansteuerung für den Magneten zusammen. In neuerer Zeit sind solche elektrischen Ansteuerungen in der Regel mit speicherprogrammierbaren elektronischen Steuerungen ausgestattet. Die Steuerparameter wurden früher über Potentiometer eingestellt, heute werden dazu Parametriergeräte oder übergeordnete Steuerungen verwendet.
Bekannt ist es ebenfalls, solche elektrischen Ansteuerungen an das zu steuernde Gerät anzubauen, sie in das Gerät zu integrieren oder sie in ein Steckergehäuse einzubauen, das an das zu steuernde Gerät angesteckt wird. Zum Beispiel vertreibt die Firma SUN Hydraulics unter der Artikel-Nummer 790-4A12V ein elektromagnetisches Gerät mit integrierter Elektronik und die Firma Hydraforce bietet als Artikel Nr. 7114950 eine in einen Adapterstecker eingebaute elektrische Ansteuerung an.
Elektrische Ansteuerungen für Elektromagnete werden auch in den Schutzrechten US 2002 003 7828, DE 10107711, DE 10 2005 006 975, DE 10 2009 020 643 und DE 10 2009 029 764 beschrieben.

Die Druckschrift DE 38 41 802 A1 beschreibt eine elektronische Steuerschaltung für automatische Getriebe und die Druckschrift JP 2010 080 869 A beschreibt eine Fehlererkennung und eine Methode zur Erkennung von Abweichungen für eine Schaltung zur Versorgung eines Elektromagneten. Die Druckschrift WO 2012/061056 A1 beschreibt eine Schaltung zum Schutz von Elektromagneten.
Eine in den Magneten integrierte Elektronikeinheit ist in DE 10 2007 019 619 beschrieben.
Solche integrierten oder ansteckbaren elektrischen Ansteuerungen sind für das Zusammenwirken mit einem Elektromagneten konzipiert. Viele von solchen Magneten betätigte Geräte weisen aber zwei Magnete auf, die sinnvoll zusammenwirken müssen.
Es sind auch in Proportionalventile integrierte elektrische Ansteuerungen bekannt, die zwei Magnete versorgen, aber diese lassen sich nicht wirtschaftlich für Einzelmagnete verwenden. Als Beispiel sei die Baureihe DSV der Firma Wandfluh genannt.
Die bekannten elektrischen Ansteuerungen bieten keinen oder nur geringen Schutz vor unzulässigen Ausgangsströmen im Falle einer Fehlfunktion der speicherprogrammierbaren elektronischen Steuerung oder des Stromreglers.

Es verbleibt die Aufgabe, eine elektrische Ansteuerung zu entwickeln, die sowohl für Einzelmagnete als auch paarweise für Geräte mit zwei Magneten einsetzbar ist.
Aus Sicherheitsgründen ist es dabei je nach Anwendung wünschenswert oder erforderlich, dass eine Überwachung der Stromregelung erfolgt und dass bei einem Fehler in der Ansteuerung der elektrische Strom zu dem angeschlossenen Magneten abgeschaltet wird.
Eine solche Überwachung kann von einer übergeordneten elektrischen Steuerung vorgenommen werden. Alternativ dazu überwachen sich zwei Ansteuerungen gegenseitig. In beiden Fällen ist es erforderlich, den zum Magneten fließenden elektrischen Strom zu messen und das so gewonnene Messsignal auch im Fall einer gravierenden Fehlfunktion der speicherprogrammierbaren elektronischen Steuerung zu der überwachenden Steuerung zu übertragen. Zusätzlich sollte eine von der Funktion der speicherprogrammierbaren Steuereinheit möglichst unabhängige Möglichkeit der Stromabschaltung bestehen.

Die beschriebenen Aufgaben werden in dem erfindungsgemäßen Gerät in der Weise gelöst, wie es die Merkmale des ersten Patentanspruchs beschreiben. Weiterführungen sind in den darauf folgenden Unteransprüchen beschrieben. Dabei werden drei Anordnungen betrachtet:
▪ Zwei elektrische Ansteuerungen mit einer übergeordneten Steuerung und einem Sensor auf dem betätigten Gerät
▪ Zwei elektrische Ansteuerungen ohne eine übergeordnete Steuerung
▪ Eine elektrische Ansteuerung mit einer übergeordneten Steuerung

Es sind daraus ohne erfinderische Leistung weitere Anordnungen ableitbar:
▪ Zwei elektrische Ansteuerungen mit einer übergeordneten Steuerung aber ohne einen Sensor auf dem betätigten Gerät
▪ Drei oder mehr elektrische Ansteuerungen mit einer gemeinsamen übergeordneten Steuerung, die erste wird von der zweiten überwacht, die zweite von der dritten und so weiter. Die letzte wird von der ersten überwacht.
▪ Drei oder mehr elektrische Ansteuerungen ohne eine übergeordnete Steuerung mit gegenseitiger Überwachung wie oben

Bei jeder der genannten Anordnungen ist die elektrische Ansteuerung für Elektromagnete unter anderem mit einer speicherprogrammierbaren elektronischen Steuereinheit, mit einer Verbindung zum Anschluss der Ansteuerung an einen Elektromagneten, einer ersten Steckverbindung zum Anschluss der Ansteuerung an eine übergeordnete elektrische Steuereinheit oder an einen elektromechanischen Signalgeber, mit einer elektrischen Stromregeleinrichtung und mit den notwendigen Verbindungsleitungen zur Versorgung eines Elektromagneten mit einem geregelten elektrischen Strom ausgestattet.

Dabei weist eine weitere Steckverbindung einen mit einer in der elektrischen Ansteuerung enthaltenen Strommesseinrichtung verbundenen Kontakt für die Leitung auf, die ein ausgehendes analoges Spannungssignal leitet, das proportional zu dem an den Elektromagneten abgegebenen elektrischen Strom ist. Die zweite Steckverbindung weist einen weiteren Kontakt für eine weitere Leitung auf, die ein Eingangssignal leitet, das einen in der elektrischen Ansteuerung vorhandenen elektronischen Schalter beaufschlagt und damit den elektrischen Strom für den Elektromagneten ausschaltet.

In mehreren unterschiedlichen Anordnungen werden gemäss einer Ausführung der Erfindung zur Betätigung eines Gerätes zwei Elektromagnete und zwei Ansteuerungen eingesetzt, die sich durch den Austausch von analogen Signalen über die abgegebenen elektrischen Ströme an die Elektromagnete gegenseitig hinsichtlich des fehlerfreien Betriebs überwachen und im Fehlerfall die Ströme zu den Elektromagneten abschalten. Die Informationen über die an die Elektromagnete abgegebenen elektrischen Ströme werden dabei auf zwei Leitungen analog übertragen. Die Schaltsignale zur Unterbrechung der Ströme werden über eine weitere Leitung übertragen. Dazu weist die erste Steckverbindung einen weiteren Kontakt für die Überwachung der anderen elektrischen Ansteuerung auf. Zum Unterbrechen der Ströme von den elektrischen Ansteuerungen zu den zugeordneten Elektromagneten dient eine gemeinsame Leitung. Die Signaleingänge zu dieser Leitung sind durch die Funktion "Verdrahtetes Oder" verknüpft, wobei ein aktives Signal auf der Leitung die Schalter öffnet. Die Unterbrechung wird durch elektronische Schalter vorgenommen. Die Information über die Sollwerte der Ströme wird über einen digitalen Datenbus, gebunden an ein mehradriges Kabel, zwischen den Steuereinheiten übertragen.

In einer Weiterführung der Erfindung ist die elektrische Ansteuerung mit einer übergeordneten elektrischen Steuereinheit durch ein erstes mehradriges Kabel und mit der ihr zugeordneten zweiten Ansteuerung mit einem zweiten mehradrigen Kabel verbunden. Die Signale von der übergeordneten Steuereinheit zur ersten Ansteuerung werden in der Betriebsart eines digitalen Busses über das zweite Kabel auch zur zweiten Ansteuerung weitergeleitet.

Gemäß einer Weiterführung der Erfindung nimmt die übergeordnete elektrische Steuereinheit an der Fehlerüberwachung teil und erweitert sie gegebenenfalls, indem das von den Elektromagneten betätigte Gerät mittels eines Sensors überwacht wird und bei einem zu den Steuerbefehlen widersprüchlichen Betriebszustand des Geräts die Stromversorgung der Magnete unterbrochen wird. Die Unterbrechung wird vorgenommen, indem die elektronischen Schalter durch ein Schaltsignal über die oben beschriebene separate Leitung geöffnet werden.

Ist kein Sensor vorgesehen, so verbessert die Einbeziehung der übergeordneten elektrischen Steuereinheit dennoch die Sicherheit der Fehlererkennung, indem die analogen Signale, die die Ströme beschreiben, mit zusätzlichen Leitungen an die übergeordnete Steuerung geführt werden. Hier werden sie mit den Sollwerten verglichen und bei unterschiedlichen Meldungen aus den elektrischen Ansteuerungen wird eine Entscheidung herbeigeführt, welche Meldung richtig ist. Damit kann die Häufigkeit von Abschaltungen aufgrund fehlerhafter Auswertungen vermindert werden.

Gemäß einer alternativen Weiterführung der Erfindung ist nur eine elektrische Ansteuerung mit einer übergeordneten elektrischen Steuereinheit über einen digitalen elektrischen Bus, über eine Leitung für ein analoges Signal und über eine weitere Leitung für eine Schaltfunktion verbunden. Die übergeordnete elektrische Steuereinheit gibt über den digitalen Bus den Sollwert des Stroms zum Elektromagneten vor und überprüft mittels des analogen Signals die Umsetzung der Vorgabe. Im Falle eines dabei erkannten Fehlers in der Stromregelung schaltet die übergeordnete Steuereinheit mittels eines Schaltsignals den Strom der elektrischen Ansteuerung über den elektronischen Schalter ab.

Gemäß einer anderen alternativen Weiterführung der Erfindung ist keine übergeordnete elektrische Steuereinheit vorgesehen, sondern die elektrische Ansteuerung, wie auch eine weitere Ansteuerung, sind mit einem elektromechanischen Signalgeber elektrisch verbunden, der gleiche oder komplementäre Signale an die beiden Ansteuerungen abgibt. Die Signalübertragung von dem Signalgeber zu den Ansteuerungen kann analog oder digital, gegebenenfalls über einen digitalen Bus, erfolgen.
Erfolgt die Signalübertragung durch analoge Signale, so sind diese vorzugsweise komplementär, wobei das Signal zur ersten elektrischen Ansteuerung anwächst, wenn das Signal zur zweiten elektrischen Ansteuerung abfällt.

Jede Ansteuerung erzeugt entsprechend dem von dem Signalgeber empfangenen Signal einen elektrischen Strom für den zugeordneten Elektromagneten und vergleicht das von der anderen Ansteuerung empfangene Signal bezüglich des dort eingeregelten Stroms mit dem aus dem Signal des Signalgebers ermittelten Sollwert. Zeigt sich bei diesem Vergleich ein Fehler, so schaltet die vergleichende elektrische Ansteuerung über die elektronischen Schalter die Ströme der elektrischen Ansteuerungen ab.

Das primäre Ausgangssignal der Ansteuerung ist gemäß einer ersten Ausführung die Höhe des geregelten elektrischen Stroms. Der elektrische Strom wird in dem zugeordneten Elektromagneten in eine Kraft gewandelt. Ein sekundäres Ausgangssignal ist ein dem geregelten Strom überlagertes Zittersignal mit vorgegebener Amplitude und Frequenz.

Gemäß einer zweiten Ausführung besteht das Ausgangssignal der Ansteuerung aus einem zeitlich variablen geregelten Stromverlauf. Dabei wird der zeitliche Verlauf durch die auf den Start bezogenen Schaltzeiten und die zugeordneten Stromwerte definiert. Die übergeordnete elektrische Steuereinheit stellt über den digitalen Bus unterschiedliche Schaltzeiten und Stromwerte ein und löst sie bei Bedarf zur Anwendung aus. Die Schaltzeiten und die zugeordneten Stromwerte werden in der elektronischen Steuereinheit gespeichert.

### Vorteile

Die beschriebenen Ansteuerungen bieten ein hohes Maß an Betriebssicherheit, weil bei einem Ausfall einer speicherprogrammierbaren Steuerung oder eines Stromreglers oder einem Fehler auf dem Datenbus diese Situation von einer unabhängigen Steuerung erkannt wird und durch Abschalten der Ströme der Ansteuerungen das angeschlossene System in einen sicheren Zustand gebracht werden kann. Die gegenseitige Übermittlung von Informationen über den Spulenstrom bei paarweise eingesetzten Ansteuerungen kann auch zur Überwachung des angetriebenen Geräts genutzt werden. Die Ansteuerung eignet sich sowohl für einzeln eingesetzte Magnete als auch für paarweise angeordnete Magnete.

### Anwendungen

Elektrische Ansteuerungen der beschriebenen Art werden vorzugsweise zur Vorsteuerung von Hydraulikventilen in fahrenden Arbeitsmaschinen verwendet. Daneben finden sie auch Anwendung bei verstellbaren Hydraulikpumpen, verstellbaren Hydraulikmotoren und Proportionalmagneten zur Kupplungsbetätigung in automatischen Getrieben.

### Bilder und beispielhafte Ausführungen

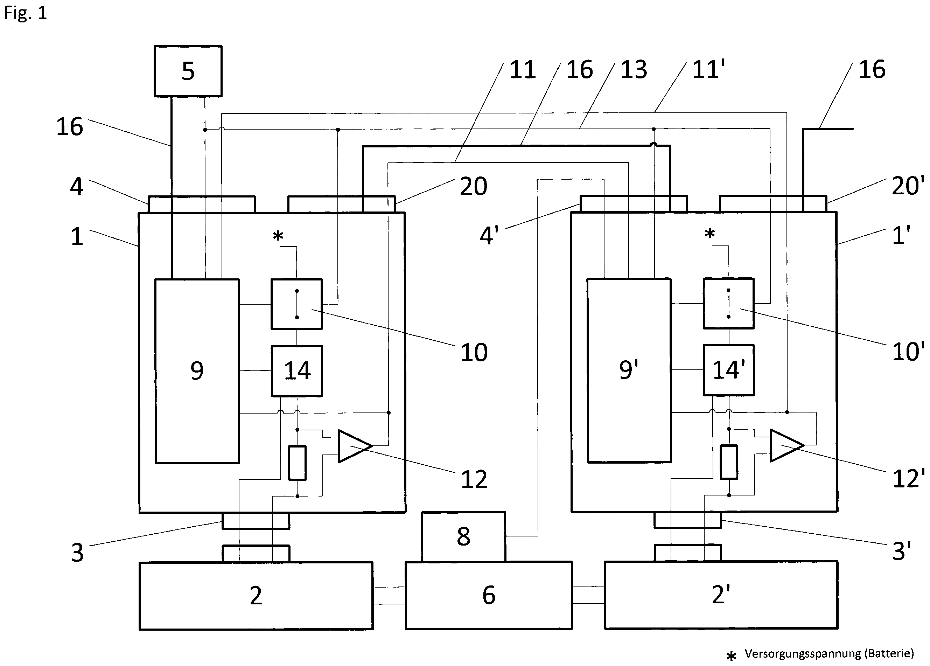

Das Bild Fig.1 zeigt eine erste beispielhafte Ausführung mit zwei elektrischen Ansteuerungen 1 und 1' und mit einer übergeordneten elektrischen Steuereinheit 5.

Die elektrischen Ansteuerungen (1) und (1') erzeugen geregelte elektrische Ströme für die Elektromagnete 2 und 2' und sind jeweils mit einer speicherprogrammierbaren elektronischen Steuereinheit 9, mit einer Verbindung 3 zum Anschluss der Ansteuerung an den Elektromagneten 2, einer ersten Steckverbindung 4 zum Anschluss der Ansteuerung an eine übergeordnete elektrische Steuereinheit 5, mit einer elektrischen Stromregeleinheit 14 und mit den notwendigen Verbindungsleitungen zur Versorgung eines Elektromagneten 2 ausgerüstet.

Die zweite Steckverbindung 20 weist einen mit einer in der elektrischen Ansteuerung 1 enthaltenen Strommesseinrichtung 12 verbundenen Kontakt für die Leitung 11 auf, die ein ausgehendes analoges Spannungssignal leitet, das proportional zu dem an den Elektromagneten 2 abgegebenen elektrischen Strom ist, und einen weiteren Kontakt für die Leitung 13, die ein Eingangssignal leitet, das einen in der elektrischen Ansteuerung 1 vorhandenen elektronischen Schalter 10 beaufschlagt und damit den elektrischen Strom für den Elektromagneten ausschaltet.
Bei dem Einsatz der elektrischen Ansteuerungen 1 zur Betätigung eines Gerätes 6 werden zwei Elektromagnete 2 und 2' und zwei Ansteuerungen 1 und 1' eingesetzt, die sich durch den Austausch von analogen Signalen über die abgegebenen elektrischen Ströme an die Elektromagnete 2 und 2' gegenseitig hinsichtlich des fehlerfreien Betriebs überwachen und im Fehlerfall die Ströme zu den Elektromagneten 1 oder 1' abschalten. Die Informationen über die an die Elektromagnete 1 oder 1' abgegebenen elektrischen Ströme werden dabei auf den Leitungen 11 und 11' übertragen. Dazu weist die Steckverbindung 4 einen weiteren Kontakt für die Überwachung der anderen elektrischen Ansteuerung 1 oder 1' auf. Die Signale zur Unterbrechung der Ströme werden über die Leitungen 13 übertragen. Die Unterbrechung wird durch die elektronischen Schalter 10 und 10' vorgenommen. Die Information über die Sollwerte der Ströme wird über einen digitalen Datenbus 16, gebunden an ein mehradriges Kabel, zwischen den elektronischen Steuereinheiten 9 und 9' übertragen.

In dieser beispielhaften Ausführung ist eine elektrische Ansteuerung 1 mit der übergeordneten elektrischen Steuereinheit 5 durch ein mehradriges Kabel und mit der anderen Ansteuerung 1' mit dem mehradrigen Kabel 16 verbunden. Die Signale von der übergeordneten Steuereinheit 5 zur Ansteuerung 1 werden in der Betriebsart eines digitalen Busses über das Kabel 16 auch zur zweiten Ansteuerung 1' weitergeleitet.

Die übergeordnete elektrische Steuereinheit 5 nimmt an der Fehlerüberwachung teil, indem das von den Elektromagneten 2 und 2' betätigte Gerät 6 mittels des Sensors 8 überwacht wird. Das Signal des Sensors 8 wird an einer der elektrischen Ansteuerungen 1 oder 1' und von dort über den digitalen Bus 16 an die übergeordnete Steuereinheit 5 übertragen. Bei einem zu den Steuerbefehlen widersprüchlichen Betriebszustand des Geräts 6 wird die Stromversorgung der Magnete 2 und 2' unterbrochen. Die Unterbrechung wird vorgenommen, indem die elektronischen Schalter 10 und 10' durch ein Schaltsignal auf die Leitung 13 geöffnet werden, wobei das Schaltsignal auf dieser Leitung 13 von der übergeordneten Steuereinheit 5 oder von einer der speicherprogrammierbaren Steuerungen 9 oder 9' erzeugt wird.

Das primäre Ausgangssignal der Ansteuerung 1 ist die Höhe des geregelten elektrischen Stroms. Der elektrische Strom wird in dem zugeordneten Elektromagneten 2 in eine Kraft gewandelt. Ein sekundäres Ausgangssignal ist ein dem geregelten Strom überlagertes Zittersignal mit vorgegebener Frequenz und Amplitude.

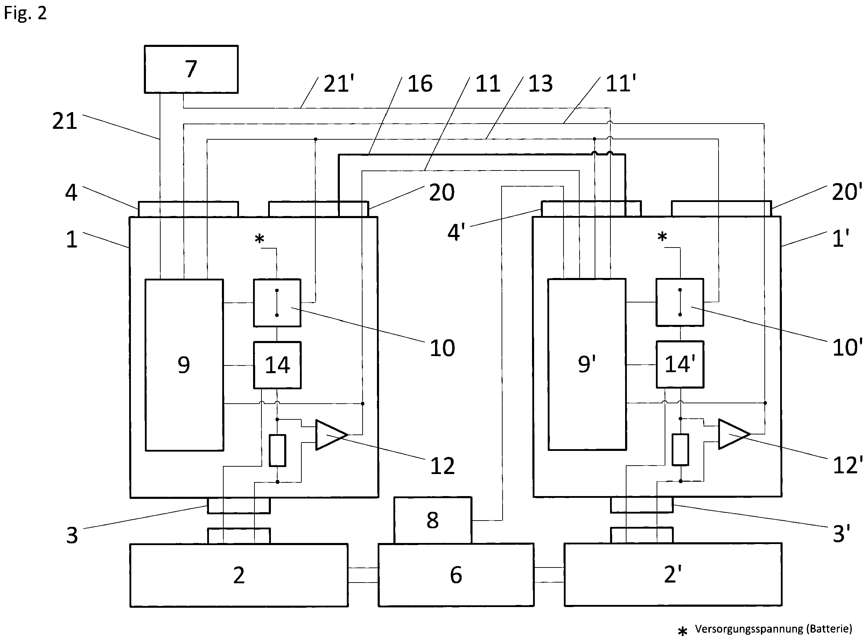

Das Bild Fig. 2 zeigt eine alternative beispielhafte Ausführung mit zwei Ansteuerungen 1 und 1' ohne eine übergeordnete elektrische Steuereinheit Die elektrischen Ansteuerungen 1 und 1' erzeugen geregelte Ströme für die Elektromagnete 2 und 2' und sind mit einer speicherprogrammierbaren elektronischen Steuereinheit 9, mit einer Verbindung 3 zum Anschluss der Ansteuerung 1 an einen Elektromagneten 2, einer ersten Steckverbindung 4 zum Anschluss der Ansteuerung an einen elektromechanischen Signalgeber 7, mit einer elektrischen Stromregeleinheit 14 und mit den notwendigen Verbindungsleitungen zur Versorgung eines Elektromagneten 2 ausgerüstet.

Die zweite Steckverbindung 20 weist einen mit einer in der elektrischen Ansteuerung 1 enthaltenen Strommesseinrichtung 12 verbundenen Kontakt für die Leitung 11 auf, die ein ausgehendes analoges Spannungssignal leitet, das proportional zu dem an den Elektromagneten 2 abgegebenen elektrischen Strom ist, und einen weiteren Kontakt für die Leitung 13, die ein Eingangssignal leitet, das einen in der elektrischen Ansteuerung 1 vorhandenen elektronischen Schalter 10 beaufschlagt und damit den elektrischen Strom für den Elektromagneten 2 ein- oder ausschaltet.

Beim Einsatz der elektrischen Ansteuerungen zur Betätigung eines Gerätes 6 werden zwei Elektromagnete 2 und 2' und zwei Ansteuerungen 1 und 1' eingesetzt, die sich durch den Austausch von analogen Signalen über die an die Elektromagnete 2 und 2' abgegebenen elektrischen Ströme gegenseitig hinsichtlich des fehlerfreien Betriebs überwachen und im Fehlerfall die Ströme zu den zugeordneten Elektromagneten 2 oder 2' abschalten. Die Informationen über die an die Elektromagnete 2 oder 2' abgegebenen elektrischen Ströme werden dabei auf den Leitungen 11 und 11' übertragen. Dazu weist die Steckverbindung 4 einen weiteren Kontakt für die Überwachung der anderen elektrischen Ansteuerung 1 oder 1' auf. Die Signale zur Unterbrechung der Ströme werden über die Leitungen 13 übertragen. Die Unterbrechung wird durch die elektronischen Schalter 10 und 10' vorgenommen. Die Information über die Sollwerte der Ströme wird über die Leitungen 21 und 21' von dem elektromechanischen Signalgeber 7 zu den elektrischen Ansteuerungen 1 und 1' als komplementäre analoge Signale übertragen.

Jede Ansteuerung 1 wandelt das von dem Signalgeber 7 empfangene Signal in einen elektrischen Strom für den Elektromagneten 2 oder 2' um und vergleicht das über die Leitung 11 oder 11' von der anderen Ansteuerung 1' empfangene Signal betreffend den dort eingeregelten Strom mit dem aus dem Signal des Signalgebers 7 ermittelten Sollwert. Zeigt sich bei diesem Vergleich ein Fehler, so schaltet die eine elektrische Ansteuerung 1 über die Leitung 13 und den Schalter 10 beziehungsweise 10' die Ströme der elektrischen Ansteuerungen 1 und 1' ab.

Das primäre Ausgangssignal der Ansteuerung 1 ist die Höhe des geregelten elektrischen Stroms. Der elektrische Strom wird in dem zugeordneten Elektromagneten 2 in eine Kraft gewandelt.

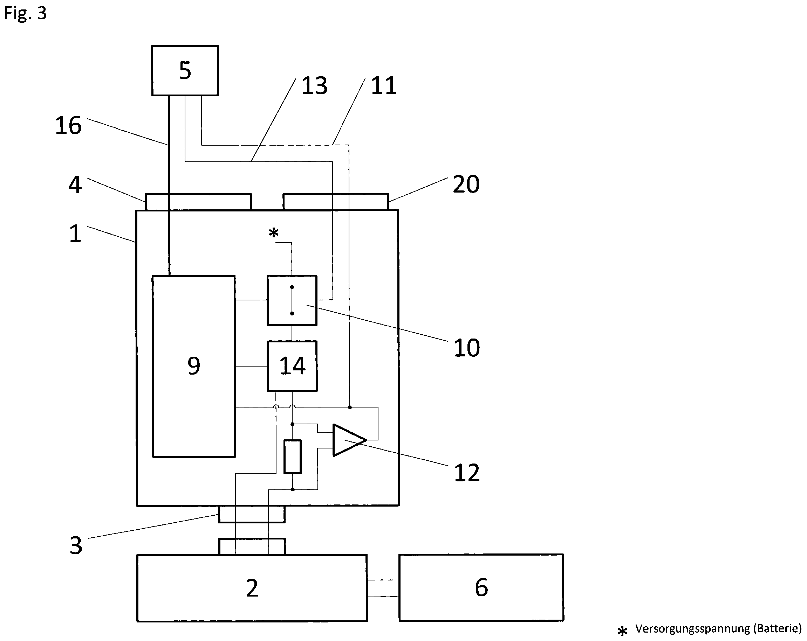

Das Bild Fig. 3 zeigt eine weitere alternative Ausführung mit einer übergeordneten elektrischen Steuereinheit 5 und nur einer elektrischen Ansteuerung 1.
Die elektrische Ansteuerung 1 erzeugt einen geregelten elektrischen Strom für den Elektromagnet 2 und ist mit einer speicherprogrammierbaren elektronischen Steuereinheit 9, mit einer ersten Verbindung 3 zum Anschluss der Ansteuerung 1 an einen Elektromagneten 2, einer ersten Steckverbindung 4 zum Anschluss der Ansteuerung 1 an eine übergeordnete elektrische Steuereinheit 5, mit einer elektrischen Regeleinheit 14 und mit den notwendigen Verbindungsleitungen zur Versorgung eines Elektromagneten 2 ausgerüstet.

Die zweite Steckverbindung 20 weist einen mit einer in der elektrischen Ansteuerung 1 enthaltenen Strommesseinrichtung 12 verbundenen Kontakt für die Leitung 11 auf, die ein ausgehendes analoges Spannungssignal leitet, das proportional zu dem an den Elektromagneten 2 abgegebenen elektrischen Strom ist. Die Steckverbindung 20 weist einen weiteren Kontakt für die Leitung 13 auf, die ein Eingangssignal leitet, das einen in der elektrischen Ansteuerung 1 vorhandenen elektronischen Schalter 10 beaufschlagt und damit den elektrischen Strom für den Elektromagneten 2 ein- oder ausschaltet.

Die elektrische Ansteuerung 1 ist mit der übergeordneten elektrischen Steuereinheit 5 über einen digitalen elektrischen Bus, über die Leitung 11 für das analoge Signal und über die Leitung 13 für die Schaltfunktion verbunden. Die übergeordnete elektrische Steuereinheit 5 gibt über den digitalen Bus den Sollwert des Stroms zum Elektromagneten 2 vor und überprüft mittels des analogen Signals auf der Leitung 11 die Umsetzung der Vorgabe. Im Falle eines dabei erkannten Fehlers in der Stromregelung schaltet die übergeordnete Steuereinheit 5 mittels eines Schaltsignals auf der Leitung 13 den Strom der elektrischen Ansteuerung 1 über den elektronischen Schalter 10 ab.

Das Ausgangssignal der Ansteuerung 1 besteht aus einem zeitlich variablen geregelten Stromverlauf. Dabei wird der zeitliche Verlauf durch die auf den Start bezogenen Schaltzeiten und die zugeordneten Stromwerte definiert. Die übergeordnete elektrische Steuereinheit 5 stellt über den digitalen Bus unterschiedliche Schaltzeiten und Stromwerte ein und löst sie bei Bedarf zur Anwendung aus. Die Schaltzeiten und die zugeordneten Stromwerte werden in der elektronischen Steuereinheit 9 gespeichert.

### Liste der Bezugszeichen

- 1.: Elektrische Ansteuerung
- 2.: Elektromagnet
- 3.: Verbindung
- 4.: Erste Steckverbindung
- 5.: Übergeordnete elektrische Steuereinheit
- 6.: Gerät
- 7.: Elektromechanischer Signalgeber
- 8.: Sensor
- 9.: Speicherprogrammierbare Steuereinheit
- 10.: Elektronischer Schalter
- 11.: Leitung für analoges Signal
- 12.: Strommesseinrichtung
- 13.: Leitung für Schaltsignal
- 14.: Stromregeleinrichtung
- 16.: Digitaler Bus
- 20.: zweite Steckverbindung
- 21.: Leitung für analoges Signal

## Patentansprüche

1. Elektrische Ansteuerung (1) für Elektromagnete (2) mit einer speicherprogrammierbaren elektronischen Steuereinheit (9), mit einer elektrischen Verbindung (3) zum Anschluss der Ansteuerung (1) an einen Elektromagneten (2), einer ersten Steckverbindung (4) zum Anschluss der Ansteuerung (1) an eine übergeordnete elektrische Steuereinheit (5) oder an einen elektro-mechanischen Signalgeber (7), einer Stromregeleinrichtung (14) und mit den notwendigen Verbindungsleitungen zur Versorgung eines Elektromagneten (2) mit einem geregelten elektrischen Strom, wobei die elektrische Ansteuerung ferner eine zweite Steckverbindung (20) aufweist, die einen mit einer in der elektrischen Ansteuerung (1) enthaltenen Strommesseinrichtung (12) verbundenen Kontakt für eine Leitung (11) aufweist, die ein ausgehendes analoges Spannungssignal leitet, das proportional zu dem an den Elektromagneten (2) abgegebenen elektrischen Strom ist, und einen weiteren Kontakt für eine weitere Leitung (13) aufweist, die ein Signal leitet, das einen in der elektrischen Ansteuerung vorhandenen elektronischen Schalter (10) beaufschlagt und damit den elektrischen Strom für den Elektromagneten (2) ausschalten kann.

2. Vorrichtung mit einer elektrischen Ansteuerung nach Anspruch 1 **dadurch gekennzeichnet, dass** die Vorrichtung zur Betätigung eines Gerätes (6) zwei Elektromagnete (2) und (2') und zusätzlich zur genannten Ansteuerung (1) eine zweite Ansteuerung (1') gemäss Anspruch 1 umfasst, wobei sich die Ansteuerungen durch den Austausch von analogen Signalen über die abgegebenen elektrischen Ströme an die Elektromagnete (2) und (2') gegenseitig hinsichtlich des fehlerfreien Betriebs überwachen und im Fehlerfall die Ströme zu den zugeordneten Elektromagneten (2) und (2') abschalten, wobei die Informationen über die an die Elektromagnete (2) und (2') abgegebenen elektrischen Ströme dabei auf den Leitungen (11) und (11') der Vorrichtung übertragen werden und die erste Steckverbindung (4) einen weiteren Kontakt für die Überwachung der anderen elektrischen Ansteuerung aufweist, wobei zum Unterbrechen der Ströme von den beiden elektrischen Ansteuerungen (1) und (1') zu den zugeordneten Elektromagneten (2) und (2') die weitere Leitung (13) der Vorrichtung dient und die Unterbrechung durch die elektronischen Schalter (10) und (10') vorgenommen wird, wobei die Information über die Sollwerte der Ströme über einen digitalen Datenbus, gebunden an ein mehradriges Kabel (16) der Vorrichtung, zwischen den Steuereinheiten (9) und (9') übertragen wird.

3. Vorrichtung mir einer elektrischen Ansteuerung (1) nach Anspruch 1 **dadurch gekennzeichnet, dass** die Ansteuerung mit der übergeordneten elektrische Steuereinheit (5) der Vorrichtung oder mit dem elektromechanischen Signalgeber (7) der Vorrichtung durch ein mehradriges Kabel der Vorrichtung verbunden ist und mit einer ihr zugeordneten zweiten Ansteuerung (1') der Vorrichtung mit einem weiteren mehradrigen Kabel der Vorrichtung verbunden ist, wobei die Signale von der übergeordneten Steuereinheit (5) oder dem elektromechanischen Signalgeber (7) zur Ansteuerung (1) in der Betriebsart eines digitalen Busses (16) über das mehradrige Kabel auch zur zweiten Ansteuerung (1') weitergeleitet werden.

4. Vorrichtung mit einer elektrischen Ansteuerung (1) nach Anspruch 2, **dadurch gekennzeichnet, dass** die Funktion der Ansteuerung (1) und die Funktion der weiteren zweiten elektrischen Ansteuerung (1') von der übergeordneten elektrischen Steuereinheit (5) überwacht wird, indem das von den Elektromagneten (2) und (2') betätigte Gerät (6) mittels eines Sensors (8) der Vorrichtung überwacht wird und dessen Signal über eine der Ansteuerungen (1) oder (1') und den digitalen Bus (16) zur übergeordneten Steuereinheit (5) geleitet wird und bei einem zu den Steuerbefehlen widersprüchlichen Betriebszustand des Geräts (6) die Stromversorgung der Elektromagnete (2) und (2') unterbrochen wird, wobei die Unterbrechung vorgenommen wird, indem entweder über den digitalen Bus (16) ein entsprechendes Signal an die digitale Steuereinheiten (9) und (9') gegeben wird und diese die elektronischen Schalter (10) und (10') öffnen oder die elektronischen Schalter (10) und (10') durch ein Signal auf der Leitung (13) geöffnet werden, wobei das Signal auf dieser Leitung (13) von der übergeordneten Steuereinheit (5) erzeugt wird.

5. Vorrichtung mit einer elektrischen Ansteuerung (1) nach Anspruch 1 **dadurch gekennzeichnet, dass** die Ansteuerung mit der übergeordneten elektrischen Steuereinheit der Vorrichtung über einen digitalen elektrischen Bus (16) der Vorrichtung, über die Leitung (11) der Vorrichtung für ein analoges Signal und über die weitere Leitung (13) der Vorrichtung für eine Schaltfunktion verbunden ist, wobei die übergeordnete elektrische Steuereinheit (5) über den digitalen Bus (16) den Sollwert des Stroms zum Elektromagneten (2) vorgibt und mittels des analogen Signals auf der Leitung (11) die Umsetzung der Vorgabe überprüft, wobei im Falle eines dabei erkannten Fehlers in der Stromregelung die übergeordnete Steuereinheit (5) mittels eines Schaltsignals auf der weiteren Leitung (13) den Strom der elektrischen Ansteuerung (1) über den elektronischen Schalter (10) abschaltet.

6. Vorrichtung mit einer elektrischen Ansteuerung (1) nach Anspruch 1 **dadurch gekennzeichnet, dass** die Ansteuerung, wie auch eine weitere Ansteuerung (1') der Vorrichtung, mit einem elektro-mechanischen Signalgeber (7) der Vorrichtung elektrisch verbunden ist, der gleiche oder komplementäre Signale an die beiden Ansteuerungen (1) und (1') abgibt, wobei die Signalübertragung von dem Signalgeber (7) zu den Ansteuerungen (1) und (1') analog oder digital, gegebenenfalls über einen digitalen Bus (16) der Vorrichtung, erfolgen kann, wobei jede Ansteuerung (1, 1') das von dem Signalgeber (7) empfangene Signal in einen elektrischen Strom für den Elektromagneten (2) oder (2') der Vorrichtung umwandelt und das über die Leitung (11) oder (11') der Vorrichtung von der anderen Ansteuerung (1, 1') empfangene Signal betreffend den dort eingeregelten Strom mit dem aus dem Signal des Signalgebers (7) ermittelten Sollwert vergleicht, und wenn sich bei diesem Vergleich ein Fehler zeigt, die elektrische Ansteuerung (1, 1'), die den Fehler erkennt, über die weitere Leitung (13) der Vorrichtung und die Schalter (10) und (10') die Ströme der elektrischen Ansteuerungen (1, 1') abschaltet.

7. Elektrische Ansteuerung (1) nach Anspruch 1 oder Vorrichtung nach einem der Ansprüche 2 bis 6 **dadurch gekennzeichnet, dass** ein primäres Ausgangssignal der jeweiligen Ansteuerung die Höhe des geregelten elektrischen Strom ist, wobei der elektrische Strom in dem zugeordneten Elektromagneten in eine Kraft gewandelt wird, und ein sekundäres Ausgangssignal ein dem geregelten Strom überlagertes Zittersignal mit vorgegebener Frequenz und Amplitude ist.

8. Vorrichtung mit einer elektrischen Ansteuerung (1) nach Anspruch 1 oder nach einem der Ansprüche 2 bis 6 **dadurch gekennzeichnet, dass** ein Ausgangssignal der jeweiligen Ansteuerung aus einem zeitlich variablen geregelten Stromverlauf besteht, wobei der zeitliche Verlauf durch die auf den Start bezogenen Schaltzeiten und die zugeordneten Stromwerte definiert wird und die übergeordnete elektrische Steuereinheit (5) der Vorrichtung über den digitalen Bus der Vorrichtung unterschiedliche Zeitverläufe und Stromwerte einstellt und bei Bedarf zur Anwendung auslöst, wobei die Schaltzeiten und die zugeordneten Stromwerte in der elektronischen Steuereinheit (9) gespeichert werden.

9. Verfahren zum Betrieb einer Vorrichtung mit einer elektrischen Ansteuerung (1) nach Anspruch 1 **dadurch gekennzeichnet, dass** die Vorrichtung zusätzlich zur genannten Ansteuerung (1) eine zweite Ansteuerung (1') gemäss Anspruch 1 umfasst, wobei die Ansteuerungen von einer übergeordneten elektrischen Steuereinheit (5) der Vorrichtung oder einem elektromechanischen Signalgeber (7) der Vorrichtung Steuersignale erhalten und proportional zu diesen Steuersignalen geregelte elektrische Ströme an angeschlossene Elektromagnete (2, 2') abgeben, wobei diese Elektromagnete ein Gerät (6) steuern und die elektrischen Ansteuerungen (1, 1') gegenseitig ihre Ausgangsströme über die signalführenden Leitungen (11, 11') der Vorrichtung überwachen, wobei beim Auftreten eines unzulässigen Ausgangsstrom bei einer der elektrischen Ansteuerungen (1, 1') die überwachende Ansteuerung (1, 1') über die weitere Leitung (13) der Vorrichtung mit Hilfe der elektronischen Schalter (10, 10') die Ausgangsströme der elektrischen Ansteuerungen (1, 1') abschaltet, wobei optional die übergeordnete elektrische Steuereinheit (5) an der Überwachung der elektrischen Ansteuerungen (1, 1') teilnimmt, indem das von den Elektromagneten (2, 2') betätigte Gerät (6) mittels eines Sensors (8) der Vorrichtung überwacht wird und bei einem zu den Steuerbefehlen widersprüchlichen Betriebszustand des Geräts (6) die Stromversorgung der Elektromagnete (2, 2') unterbrochen wird.

10. Verfahren zum Betrieb einer Vorrichtung mit einer elektrischen Ansteuerung (1) nach Anspruch 1 **dadurch gekennzeichnet, dass** die Vorrichtung zusätzlich zur genannten Ansteuerung (1) eine zweite Ansteuerung (1') gemäss Anspruch 1 umfasst, wobei die Ansteuerungen von einer übergeordneten elektrischen Steuereinheit (5) der Vorrichtung oder einem elektromechanischen Signalgeber (7) der Vorrichtung Steuersignale erhalten und proportional zu diesen Steuersignalen geregelte elektrische Ströme an angeschlossene Elektromagnete (2, 2') abgeben, wobei diese Elektromagnete (2, 2') ein Gerät (6) steuern und die elektrischen Ansteuerungen (1, 1') gegenseitig ihre Ausgangsströme über die signalführenden Leitungen (11, 11') der Vorrichtung überwachen, wobei beim Auftreten eines unzulässigen Ausgangsstrom bei einer der elektrischen Ansteuerungen (1, 1') die überwachende Ansteuerung (1, 1') über die weitere Leitung (13) der Vorrichtung mit Hilfe der elektronischen Schaltern (10, 10') die Ausgangsströme der elektrischen Ansteuerungen (1, 1') abschaltet, wobei optional die übergeordnete elektrische Steuereinheit (5) an der Überwachung der elektrischen Ansteuerungen (1, 1') teilnimmt, wobei die übergeordnete elektrische Steuereinheit (5) die Ausgangsströme der elektrischen Ansteuerungen (1, 1') über die Leitungen (11, 11') überwacht und die gemessenen Signale mit Sollwerten vergleicht und bei unterschiedlichen Meldungen aus den elektrischen Ansteuerungen (1, 1') eine Entscheidung herbeigeführt wird, welche Meldung richtig ist, und erforderlichenfalls die Stromversorgungen mittels der elektronischen Schalter (10, 10') unterbricht.

## Claims

1. Electrical drive circuit (1) for electromagnets (2) having an electronic programmable logic control unit (9), having an electrical connection (3) for connecting the drive circuit (1) to an electromagnet (2), a first plug connection (4) for connecting the drive circuit (1) to a superordinate electrical control unit (5) or to an electromechanical signal generator (7), a current regulating device (14) and having the necessary connecting lines for supplying an electromagnet (2) with a regulated electric current, wherein the electrical drive circuit further has a second plug connection (20), which has a contact, connected to a current measuring device (12) contained in the electrical drive circuit (1), for a line (11) carrying an outgoing analogue voltage signal that is proportional to the electric current delivered to the electromagnet (2), and has a further contact for a further line (13) carrying a signal that is applied to an electronic switch (10) present in the electrical drive circuit and can thus switch off the electric current for the electromagnet (2).

2. Apparatus having an electrical drive circuit according to Claim 1, **characterized in that** the apparatus comprises two electromagnets (2) and (2') and, in addition to said drive circuit (1), a second drive circuit (1') according to Claim 1 for the purpose of operating an appliance (6),
wherein the drive circuits monitor one another for correct operation by interchanging analogue signals about the delivered electric currents to the electromagnets (2) and (2') and, in the event of a fault, disconnect the currents to the associated electromagnets (2) and (2'), wherein the information about the electric currents delivered to the electromagnets (2) and (2') is in this case transmitted on the lines (11) and (11') of the apparatus and the first plug connection (4) has a further contact for monitoring the other electrical drive circuit, wherein the further line (13) of the apparatus is used to interrupt the currents from the two electrical drive circuits (1) and (1') to the associated electromagnets (2) and (2') and the interruption is performed by the electronic switches (10) and (10'), wherein the information about the setpoint values of the currents is transmitted between the control units (9) and (9') via a digital data bus, connected to a multicore cable (16) of the apparatus.

3. Apparatus having an electrical drive circuit (1) according to Claim 1, **characterized in that** the drive circuit is connected to the superordinate electrical control unit (5) of the apparatus or to the electromechanical signal generator (7) of the apparatus by a multicore cable of the apparatus and is connected to a second drive circuit (1') of the apparatus associated therewith by means of a further multicore cable of the apparatus, wherein the signals from the superordinate control unit (5) or the electromechanical signal generator (7) to the drive circuit (1) are also forwarded to the second drive circuit (1') in the mode of a digital bus (16) via the multicore cable.

4. Apparatus having an electrical drive circuit (1) according to Claim 2, **characterized in that** the operation of the drive circuit (1) and the operation of the further second electrical drive circuit (1') are monitored by the superordinate electrical control unit (5) by virtue of the appliance (6) operated by the electromagnets (2) and (2') being monitored by means of a sensor (8) of the apparatus, and the signal from said sensor being routed to the superordinate control unit (5) via one of the drive circuits (1) or (1') and the digital bus (16), and an operating state of the appliance (6) that is inconsistent with the control commands resulting in the supply of current to the electromagnets (2) and (2') being interrupted, wherein the interruption is performed by virtue of either an applicable signal being provided to the digital control units (9) and (9') via the digital bus (16) and said digital control units opening the electronic switches (10) and (10') or the electronic switches (10) and (10') being opened by a signal on the line (13), wherein the signal is generated on this line (13) by the superordinate control unit (5).

5. Apparatus having an electrical drive circuit (1) according to Claim 1, **characterized in that** the drive circuit is connected to the superordinate electrical control unit of the apparatus via a digital electrical bus (16) of the apparatus, via the line (11) of the apparatus for an analogue signal and via the further line (13) of the apparatus for a switching function, wherein the superordinate electrical control unit (5) uses the digital bus (16) to preset the setpoint value of the current for the electromagnet (2) and uses the analogue signal on the line (11) to check the implementation of the preset, wherein a fault detected in the current regulation during said check results in the superordinate control unit (5) using a switching signal on the further line (13) to disconnect the current of the electrical drive circuit (1) via the electronic switch (10).

6. Apparatus having an electrical drive circuit (1) according to Claim 1, **characterized in that** the drive circuit, and also a further drive circuit (1') of the apparatus, is electrically connected to an electromechanical signal generator (7) of the apparatus that delivers identical or complementary signals to the two drive circuits (1) and (1'), wherein the signal transmission from the signal generator (7) to the drive circuits (1) and (1') can be effected in analogue or digital fashion, if need be via a digital bus (16) of the apparatus, wherein each drive circuit (1, 1') converts the signal received from the signal generator (7) into an electric current for the electromagnet (2) or (2') of the apparatus and compares the signal received from the other drive circuit (1, 1') via the line (11) or (11') of the apparatus, relating to the steady-state current in said drive circuit, with the setpoint value ascertained from the signal from the signal generator (7), and, if this comparison reveals a fault, the electrical drive circuit (1, 1') detecting the fault uses the further line (13) of the apparatus and the switches (10) and (10') to disconnect the currents of the electrical drive circuits (1, 1').

7. Electrical drive circuit (1) according to Claim 1 or apparatus according to one of Claims 2 to 6, **characterized in that** a primary output signal of the respective drive circuit is the level of the regulated electric current, wherein the electric current is converted into a force in the associated electromagnet, and a secondary output signal is a jitter signal of preset frequency and amplitude that is overlaid on the regulated current.

8. Apparatus having an electrical drive circuit (1) according to Claim 1 or according to one of Claims 2 to 6, **characterized in that** an output signal of the respective drive circuit consists of a regulated current profile that is variable over time, wherein the time profile is defined by the switching times referenced to the start and by the associated current values, and the superordinate electrical control unit (5) of the apparatus uses the digital bus of the apparatus to set different time profiles and current values and, when required, initiates them for application, wherein the switching times and the associated current values are stored in the electronic control unit (9).

9. Method for operating an apparatus having an electrical drive circuit (1) according to Claim 1, **characterized in that** the apparatus comprises, in addition to said drive circuit (1), a second drive circuit (1') according to Claim 1, wherein the drive circuits receive control signals from a superordinate electrical control unit (5) of the apparatus or from an electromechanical signal generator (7) of the apparatus and deliver regulated electric currents to connected electromagnets (2, 2') in proportion to these control signals, wherein these electromagnets control an appliance (6) and the electrical drive circuits (1, 1') monitor one another's output currents via the signal-carrying lines (11, 11') of the apparatus, wherein the occurrence of an inadmissible output current on one of the electrical drive circuits (1, 1') results in the monitoring drive circuit (1, 1') using the further line (13) of the apparatus to disconnect the output currents of the electrical drive circuits (1, 1') by means of the electronic switches (10, 10'), wherein optionally the superordinate electrical control unit (5) participates in the monitoring of the electrical drive circuits (1, 1') by virtue of the appliance (6) operated by the electromagnets (2, 2') being monitored by means of a sensor (8) of the apparatus and an operating state of the appliance (6) that is inconsistent with the control commands resulting in the supply of current to the electromagnets (2, 2') being interrupted.

10. Method for operating an apparatus having an electrical drive circuit (1) according to Claim 1, **characterized in that** the apparatus comprises, in addition to said drive circuit (1), a second drive circuit (1') according to Claim 1, wherein the drive circuits receive control signals from a superordinate electrical control unit (5) of the apparatus or from an electromechanical signal generator (7) of the apparatus and deliver regulated electric currents to connected electromagnets (2, 2') in proportion to these control signals, wherein these electromagnets (2, 2') control an appliance (6) and the electrical drive circuits (1, 1') monitor one another's output currents via the signal-carrying lines (11, 11') of the apparatus, wherein the occurrence of an inadmissible output current on one of the electrical drive circuits (1, 1') results in the monitoring drive circuit (1, 1') using the further line (13) of the apparatus to disconnect the output currents of the electrical drive circuits (1, 1') by means of the electronic switches (10, 10'), wherein optionally the superordinate electrical control unit (5) participates in the monitoring of the electrical drive circuits (1, 1'), wherein the superordinate electrical control unit (5) monitors the output currents of the electrical drive circuits (1, 1') via the lines (11, 11') and compares the measured signals with setpoint values, and different reports from the electrical drive circuits (1, 1') result in a decision being brought about regarding which report is correct and, if necessary, interrupting the supplies of current by means of the electronic switches (10, 10').

## Revendications

1. Commande électrique (1) pour électroaimants (2) avec une unité de commande électronique à mémoire programmable (9), avec une connexion électrique (3) pour le raccordement de la commande (1) à un électroaimant (2), une première connexion enfichable (4) pour le raccordement de la commande (1) à une unité de commande électrique d'ordre supérieur (5) ou à un poste transmetteur de signaux électromécanique (7), un dispositif de régulation de courant (14), et avec les lignes de connexion nécessaires pour l'alimentation d'un électroaimant (2) avec un courant électrique régulé, dans laquelle la commande électrique présente en outre une deuxième connexion enfichable (20), laquelle présente un contact relié à un dispositif de mesure de courant (12) contenu dans la commande électrique (1) pour une ligne (11) qui conduit un signal de tension analogique sortant, lequel est proportionnel au courant électrique délivré à l'électroaimant (2), et présente un autre contact pour une autre ligne (13) qui conduit un signal, lequel alimente un interrupteur électronique (10) présent dans la commande électrique et peut ainsi couper le courant électrique pour l'électroaimant (2).

2. Dispositif avec une commande électrique selon la revendication 1, **caractérisé en ce que**, pour l'actionnement d'un appareil (6), le dispositif comprend deux électroaimants (2) et (2') et une deuxième commande (1') en plus de la commande (1) citée selon la revendication 1, dans lequel les commandes se surveillent par l'échange de signaux analogiques via les courants électriques délivrés aux électroaimants (2) et (2') réciproquement concernant le fonctionnement sans erreur et, en cas d'erreur, coupent les courants vers les électroaimants (2) et (2') associés, dans lequel les informations sur les courants électriques délivrés aux électroaimants (2) et (2') sont ce faisant transmises sur les lignes (11) et (11') du dispositif et la première connexion enfichable (4) présente un autre contact pour la surveillance de l'autre commande électrique, dans lequel l'autre ligne (13) du dispositif sert à l'interruption des courants des deux commandes électriques (1) et (1') électroaimants (2) et (2') associés et l'interruption est réalisée par les interrupteurs électroniques (10) et (10'), dans lequel l'information sur les valeurs de consigne des courants est transmise via un bus de données numérique, lié à un câble à plusieurs conducteurs (16) du dispositif, entre les unités de commande (9) et (9').

3. Dispositif avec une commande électrique (1) selon la revendication 1, **caractérisé en ce que** la commande est raccordée à l'unité de commande électrique d'ordre supérieur (5) du dispositif ou au poste transmetteur de signaux électromécanique (7) du dispositif par un câble à plusieurs conducteurs du dispositif et est raccordée, avec un autre câble à plusieurs conducteurs du dispositif, à une deuxième commande (1') du dispositif qui lui est associée,
dans lequel les signaux de l'unité de commande d'ordre supérieur (5) ou du poste transmetteur de signaux électromécanique (7) vers la commande (1) sont retransmis, selon le mode de fonctionnement d'un bus numérique (16) via le câble à plusieurs conducteurs, également à la deuxième commande (1').

4. Dispositif avec une commande électrique (1) selon la revendication 2, **caractérisé en ce que** le fonctionnement de la commande (1) et le fonctionnement de la deuxième commande électrique (1') supplémentaire sont surveillés par l'unité de commande électrique d'ordre supérieur (5) par le fait que l'appareil (6) actionné par les électroaimants (2) et (2') est surveillé au moyen d'un capteur (8) du dispositif et son signal est conduit via l'une des commandes (1) ou (1') et le bus numérique (16) vers l'unité de commande d'ordre supérieur (5) et qu'en cas d'un état de fonctionnement de l'appareil (6) en contradiction avec les instructions de commande, l'alimentation en courant des électroaimants (2) et (2') est interrompue, dans lequel l'interruption est réalisée par le fait que, via le bus numérique (16), un signal correspondant est délivré aux unités de commande numériques (9) et (9') et celles-ci ouvrent les interrupteurs électroniques (10) et (10') ou les interrupteurs électroniques (10) et (10') sont ouverts par un signal sur la ligne (13), dans lequel le signal sur cette ligne (13) est généré par l'unité de commande d'ordre supérieur (5).

5. Dispositif avec une commande électrique (1) selon la revendication 1, **caractérisé en ce que** la commande est raccordée à l'unité de commande électrique d'ordre supérieur du dispositif via un bus électrique numérique (16) du dispositif, via la ligne (11) du dispositif pour un signal analogique et via l'autre ligne (13) du dispositif pour une fonction de commutation,
dans lequel l'unité de commande électrique d'ordre supérieur (5) prescrit via le bus numérique (16) la valeur de consigne du courant vers l'électroaimant (2) et vérifie au moyen du signal analogique sur la ligne (11) la réalisation de la prescription, dans lequel, en cas d'une erreur reconnue ce faisant dans la régulation du courant, l'unité de commande d'ordre supérieur (5) coupe, au moyen d'un signal de commutation sur l'autre ligne (13), le courant de la commande électrique (1) via l'interrupteur électronique (10).

6. Dispositif avec une commande électrique (1) selon la revendication 1, **caractérisé en ce que** la commande, tout comme également une autre commande (1') du dispositif, est raccordée électriquement à un poste transmetteur de signaux électromécanique (7) du dispositif, lequel délivre des signaux identiques ou complémentaires aux deux commandes (1) et (1'), dans lequel la transmission des signaux du poste transmetteur de signaux (7) aux commandes (1) et (1') peut s'effectuer de manière analogique ou numérique, le cas échéant via un bus numérique (16) du dispositif, dans lequel chaque commande (1, 1') convertit le signal réceptionné par le poste transmetteur de signaux (7) en un courant électrique pour l'électroaimant (2) ou (2') du dispositif et compare le signal réceptionné via la ligne (11) ou (11') du dispositif de l'autre commande (1, 1'), concernant le courant qui y est régulé, avec la valeur de consigne déterminée à partir du signal du poste transmetteur de signaux (7) et, en cas d'apparition d'une erreur lors de cette comparaison, la commande électrique (1, 1') qui reconnaît l'erreur coupe via l'autre ligne (13) du dispositif et les interrupteurs (10) et (10'), les courants des commandes électriques (1, 1').

7. Commande électrique (1) selon la revendication 1 ou dispositif selon l'une des revendications 2 à 6,
caractérisé(e) en ce qu'un signal de sortie principal de la commande respective est le niveau du courant électrique régulé, dans lequel/laquelle le courant électrique dans l'électroaimant associé est converti en une force et un signal de sortie secondaire est un signal de tremblement à fréquence et amplitude prescrite superposé au courant régulé.

8. Dispositif avec une commande électrique (1) selon la revendication 1 ou selon l'une des revendications 2 à 6, **caractérisé en ce qu'**un signal de sortie de la commande respective se compose d'une variation de courant régulée de manière variable dans le temps, dans lequel la variation dans le temps est définie par les temps de commutation relatifs au commencement et les valeurs de courant associées et l'unité de commande électrique d'ordre supérieur (5) du dispositif règle via le bus numérique du dispositif différentes variations dans le temps et valeurs de courant et les déclenche pour l'utilisation en cas de besoin, dans lequel les temps de commutation et les valeurs de courant associées sont stockés dans l'unité de commande électronique (9).

9. Procédé pour l'exploitation d'un dispositif avec une commande électrique (1) selon la revendication 1,
**caractérisé en ce que** le dispositif comprend, en plus de la commande (1) citée, une deuxième commande (1') selon la revendication 1, dans lequel les commandes obtiennent des signaux de commande d'une unité de commande électrique d'ordre supérieur (5) du dispositif ou d'un poste transmetteur de signaux électromécanique (7) du dispositif et délivrent des courants électriques régulés de manière proportionnelle à ces signaux de commande à des électroaimants (2, 2') raccordés, dans lequel ces électroaimants commandent un appareil (6) et les commandes électriques (1, 1') surveillent réciproquement leurs courants de sortie via les lignes de conduction de signaux (11, 11') du dispositif, dans lequel, en cas d'apparition d'un courant de sortie non autorisé au niveau de l'une des commandes électriques (1, 1'), la commande (1, 1') qui surveille coupe via l'autre ligne (13) du dispositif, à l'aide des interrupteurs électroniques (10, 10'), les courants de sortie des commandes électriques (1, 1'), dans lequel l'unité de commande électrique d'ordre supérieur (5) participe en option à la surveillance des commandes électriques (1, 1') par le fait que l'appareil (6) actionné par les électroaimants (2, 2') est surveillé au moyen d'un capteur (8) du dispositif et en cas d'un état de fonctionnement de l'appareil (6) en contradiction avec les instructions de commande, l'alimentation en courant des électroaimants (2, 2') est interrompue.

10. Procédé pour l'exploitation d'un dispositif avec une commande électrique (1) selon la revendication 1,
**caractérisé en ce que** le dispositif comprend, en plus de la commande (1) citée, une deuxième commande (1') selon la revendication 1, dans lequel les commandes obtiennent de la part d'une unité de commande électrique d'ordre supérieur (5) du dispositif ou d'un poste transmetteur de signaux électromécanique (7) du dispositif des signaux de commande et délivrent des courants électriques régulés proportionnellement à ces signaux de commande à des électroaimants (2, 2') raccordés, dans lequel ces électroaimants (2, 2') commandent un appareil (6) et les commandes électriques (1, 1') surveillent réciproquement leurs courants de sortie via les lignes conduisant les signaux (11, 11') du dispositif, dans lequel, en cas d'apparition d'un courant de sortie non autorisé au niveau de l'une des commandes électriques (1, 1'), la commande (1, 1') qui surveille coupe via l'autre ligne (13) du dispositif, à l'aide des interrupteurs électroniques (10, 10'), les courants de sortie des commandes électriques (1, 1'), dans lequel l'unité de commande électrique d'ordre supérieur (5) participe en option à la surveillance des commandes électriques (1, 1'), dans lequel l'unité de commande électrique d'ordre supérieur (5) surveille les courants de sortie des commandes électriques (1, 1') via les lignes (11, 11') et compare les signaux mesurés avec des valeurs de consigne et, en cas de messages différents des commandes électriques (1, 1'), une décision est prise quant à celui des messages qui est juste et en cas de nécessité, l'unité de commande électrique d'ordre supérieur interrompt les alimentations en courant au moyen des interrupteurs électroniques (10, 10').
